# FASCICULE DE BREVET EUROPEEN

(11) **EP 1 773 055 B1**
(45) Date de publication et mention de la délivrance du brevet: **03.12.2014**
(21) Numéro de dépôt: 05292094.9
(22) Date de dépôt: 07.10.2005
(51) Int. Cl.: H04N 21/418

(54) **Méthode de vérification de droits contenus dans un module de sécurité**
Verfahren zur Verifikation von Rechten an einem Inhalt innerhalb eines Sicherheitsmoduls
Method for verification of content rights in a security module

(43) Date de publication de la demande: 11.04.2007
(73) Titulaire: Nagra France SAS, 92130 Issy-les-Moulineaux (FR)
(72) Inventeur: Le Floch, Dominique, 92120 Montrouge (FR); Maillard, Michel, 78120 Rambouillet (FR)
(74) Mandataire: Wenger, Joel-Théophile

(56) Documents cités:
- WO-A-98/43430
- WO-A-2004/008765
- WO-A-2004/071087
- US-A- 5 461 675
- US-A- 5 991 400
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

### Domaine de l'invention

La présente invention concerne le domaine des modules de sécurité utilisés comme dispositif de protection et de personnalisation de divers appareils électroniques, tel que des décodeurs de télévision à péage, des ordinateurs personnels, des équipements mobiles etc.

Un module de sécurité est un dispositif réputé inviolable contenant diverses clés d'encryption/décryption ainsi que des données propres à un utilisateur qui définissent des droits qu'il a acquis pour l'exploitation de données. Le module de sécurité peut se trouver sous différentes formes telles qu'une carte à puce insérée dans un lecteur, un circuit intégré soudé sur une carte mère, une carte du type SIM que l'on rencontre dans la téléphonie mobile etc.

### Arrière plan technique

Les modules de sécurité de décodeurs de télévision à péage par exemple contiennent des clés d'encryption/décryption servant à décoder un flux de données audio/vidéo entrant dans le décodeur. Afin d'obtenir les données en clair, des tiers, plus communément appelés "hackers", ont recours à diverses méthodes frauduleuses comme les attaques matérielles ou logicielles (hardware, software attacks). Ces attaques visent plus particulièrement les données contenues dans la mémoire du module de sécurité que le "hacker" tente de modifier pour s'attribuer des droits indûment.

Un droit se présente généralement sous la forme d'une commande, d'un message ou d'une instruction accompagnée de paramètres ou sous la forme d'une clé permettant de libérer un accès à des données audio/vidéo diffusée, par exemple. Un tel droit autorise, entre autre, soit l'accès à un ou à un bouquet de canaux de diffusion particuliers, soit à un programme durant une période prédéfinie, ou encore à un type spécifique de programme acquis après un paiement en ligne.

Une attaque courante consiste à perturber l'exécution, par le processeur du module de sécurité, du code machine du programme informatique (glitch attack). Par exemple, le "hacker" analyse les signaux générés par les instructions du processeur et lorsqu'une instruction de comparaison ou de saut est exécutée, il applique une perturbation externe rapide ou augmente la fréquence du signal d'horloge. Les instructions sont ainsi temporairement bloquées et une authentification de données sensibles peut être contournée.

Dans le domaine de la télévision à péage, le module de sécurité associé au décodeur reçoit et stocke des droits issus de messages d'administration EMM (Entitlement Management Message) transmis par le centre de gestion d'un opérateur. Ces droits autorisant le décryptage et la visualisation de programmes télévisés que l'abonné a acquis. D'autres types d'attaques consistent à créer des messages d'administration EMM factices ou d'utiliser une faille de sécurité. Une parade contre le remplacement abusif du contenu de la mémoire concernant les droits consiste à calculer une empreinte ou un "checksum" de ce contenu à l'aide d'une fonction mathématique unidirectionnelle. Une comparaison avec une empreinte de référence permet de distinguer un contenu modifié d'un contenu authentique.

Lorsqu'un message EMM factice a été accepté par le module de sécurité, cette parade devient inutile. Dans le cas où cette faille de sécurité aurait été comblée par un programme correctif, l'empreinte calculée localement sera correcte, mais elle ne correspondra pas nécessairement avec une empreinte calculée sur les droits enregistrés au centre de gestion. Afin de compléter la vérification, un message requérant la comparaison de l'empreinte locale avec l'empreinte distante du centre de gestion est transmis par chaque module de sécurité audit centre. Cet envoi de messages représente un inconvénient majeur car d'une part la liaison du décodeur équipé du module de sécurité avec le centre de gestion peut être engorgée et d'autre part le centre lui-même appelé à vérifier les empreintes après chaque envoi de messages EMM peut être surchargé.

Le document WO2004/008765 décrit un décodeur associé à un module de sécurité comprenant une mémoire pour stocker une pluralité de clés d'autorisation et des informations de droits autorisant la décryption de mots de contrôle. Ces informations de droits déterminent le moment et les conditions auxquelles le module de sécurité fournit au décodeur un mot de contrôle préalablement décrypté par une clé d'autorisation. Un détecteur de source détermine la source du flux de données transmis au décodeur et reçoit des messages ECM. En réponse, le détecteur transmet des commandes au module de sécurité pour décrypter un ou des mots de contrôle contenu dans le message ECM. Les commandes servent à sélectionner la clé d'autorisation et les informations de droits à utiliser pour décrypter un mot de contrôle en fonction de la source du message ECM telle qu'un flux diffusé en direct ou une unité de stockage. L'utilisation conjuguée d'une clé d'autorisation et d'une information de droits spécifiques permet d'empêcher la manipulation du système décodeur /module de sécurité en utilisant une clé sans lien avec le message ECM reçu et les informations de droits correspondantes.

### Description sommaire de l'invention

Le but de la présente invention est de minimiser le nombre de messages échangés entre le module de sécurité et le centre de gestion ainsi que le nombre d'opérations de vérification effectuées par ce dernier. Un autre but est d'apporter une contre-mesure efficace contre les attaques de "hackers" exploitant une faille provisoire de la sécurité pour modifier les droits stockés dans le module de sécurité.

Ces buts sont atteints par une méthode de vérification de droits contenus dans un module de sécurité associé à un appareil de traitement de données numériques diffusées, selon la revendication 1.

Le message de mise à jour transmis par le centre de gestion inclut au moins un droit et un moyen de vérification tel qu'une empreinte calculée sur ce droit avec, par exemple, une fonction unidirectionnelle et sans collision du type "Hash". Ce message est encrypté soit avec une clé unique propre au module de sécurité de l'appareil, soit commune à un groupe de modules de sécurité. Ce dernier contient des droits qui sont stockés dans une mémoire de droit selon l'art antérieur.

Chaque message mettant à jour la mémoire des droits est stocké dans une mémoire de messages, ce message pouvant être stocké dans sa totalité ou seulement la partie utile obtenue après extraction des en-têtes, du numéro du module de sécurité, etc. Cette partie de message reste sous forme sécurisée, soit sous forme encryptée ou signée, c'est-à-dire accompagnée d'une empreinte encryptée.

Le message de mise à jour d'un droit reçu du centre de gestion est décrypté avec la clé de transport dudit message qui peut être soit une clé globale ou une clé propre au module de sécurité. Puis, une vérification est effectuée à l'aide de l'empreinte ou signature accompagnant le droit. Celle-ci est comparée avec une empreinte déterminée par le module de sécurité et lorsque le résultat de la comparaison est positif, le message est stocké dans la mémoire des messages et le droit correspondant stocké dans la mémoire des droits est mis à jour.

Une autre manière de vérifier le droit reçu est d'extraire de l'empreinte reçue la valeur du droit et comparer ce droit calculé avec le droit contenu dans le message. Ceci peut être réalisé par une empreinte déterminée par l'encryption du droit. La possession de la même clé (clé symétrique) ou de la clé correspondante (clé asymétrique) permet une telle extraction.

Lors de la vérification postérieure, un droit stocké dans la mémoire des droits est d'abord identifié et le message correspondant qui a entraîné le stockage dudit droit est recherché dans la mémoire des messages. Ce message de droit est vérifié à l'aide de son empreinte. Si ce message a été stocké sous forme encryptée, il est préalablement décrypté avec la clé de transport ou la clé unique du module de sécurité.

En cas de succès de la vérification, le droit extrait du message est comparé avec le droit correspondant stocké.

Cette vérification postérieure appelée ré-exécution du message de droit peut être effectuée soit à l'enclenchement de l'appareil, soit à la réception d'un message de contrôle ECM ou d'un message d'administration EMM, soit périodiquement à intervalles prédéfinis. Lorsque le résultat de la comparaison est négatif, l'appareil fonctionne selon un mode de défaut avec par exemple des droits d'accès à des données restreints.

La présente invention propose une méthode de vérification de droits contenus dans un module de sécurité associé à un appareil de traitement de données numériques diffusées, ledit appareil étant relié à un centre de gestion transmettant des messages encryptés de mise à jour des droits d'accès audites données numériques et des messages de contrôle servant à décrypter les données diffusées, caractérisée en ce qu'elle comprend les étapes suivantes:
- réception et lecture par le module de sécurité de tout ou partie d'un message de droit comprenant au moins un droit et des moyens de vérification dudit droit,
- décryption et vérification du message de droit et stockage de tout ou partie dudit message de droit dans une mémoire des messages,
- réception d'un message de contrôle comprenant au moins un mot de contrôle servant à décrypter lesdites données et extraction d'un droit conditionnel dudit message, ce droit conditionnel définissant le ou les droits nécessaires pour l'utilisation du mot de contrôle,
- recherche du message de droit stocké correspondant au droit conditionnel préalablement extrait et vérification dudit message,
- comparaison du droit contenu dans le message avec le droit conditionnel extrait du message de contrôle,
- détermination d'un état de défaut lorsque le résultat de la comparaison indique une différence.

Selon l'invention, la mémoire des droits n'est plus nécessaire car la vérification des droits est effectuée "en direct" lors de la réception d'un message de contrôle ECM. Ce dernier comprend un droit conditionnel qui est comparé, après recherche du message correspondant dans la mémoire des messages, avec le droit obtenu après ré-exécution du message trouvé.

Selon une forme d'exécution, le message de droit reçu, une fois décrypté avec la clé de transport, peut être ré-encrypté par une clé locale avant son stockage dans la mémoire des messages. Avant de vérifier un tel message, il sera nécessaire de le décrypter avec cette clé locale.

### Brève description des figures

L'invention sera mieux comprise grâce à la description détaillée qui va suivre et qui se réfère aux figures annexées données à titre d'exemple nullement limitatif.
- La figure 1 illustre un organigramme représentant la méthode de vérification des droits selon l'état de la technique avec une mémoire de droits stockant des droits qui sont comparés avec des droits correspondant des messages de droit,
- La figure 2 illustre un organigramme représentant la méthode de vérification des droits selon la présente invention sans mémoire de droits en comparant directement un droit d'un message ECM avec un droit d'un message de droit.

### Description détaillée de l'invention

L'exemple décrit ci-après se rapporte au domaine de la télévision numérique à péage où un décodeur (ou set top box) recevant un flux de données audio vidéo est connecté à un centre de gestion. Ce dernier transmet au décodeur, via le flux, des messages (EMM) d'administration ou de droit contenant au moins un droit (Dr) accompagnés de son empreinte H(Dr).

Selon notre exemple, nous allons considérer la mise à jour d'un module de sécurité d'une manière unique, soit par l'adressage d'un message personnel.

L'ensemble composé du droit (Dr) et de son empreinte H(Dr) est encrypté avec une clé personnelle (Ku) unique du module sécurité associé au décodeur. Le message (EMM) est encrypté avec une clé globale (Kg), de préférence asymétrique. Dans cet exemple, l'empreinte H(Dr) est obtenue à l'aide d'une fonction unidirectionnelle et sans collision du type Hash effectuée sur le droit (Dr).

Le message (EMM) ou plutôt une partie de celui-ci peut alors se représenter sous la forme {[Dr, H(Dr)]Ku}Kg. La clé globale (Kg) est une clé publique correspondant à une clé privée contenue dans le module sécurité permettant de décrypter le message EMM dans son ensemble.

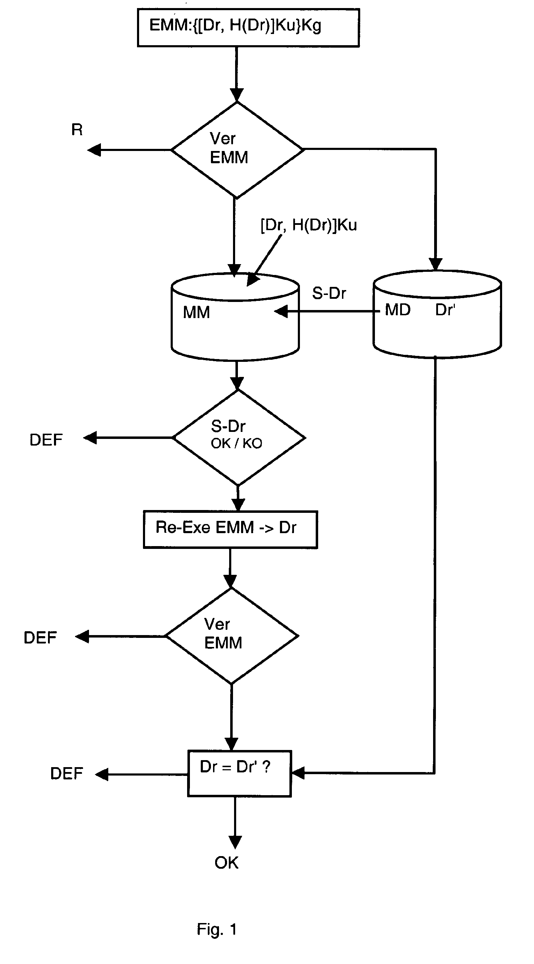

Afin de faciliter la compréhension de la présente invention, le schéma de la figure 1 illustre une méthode selon l'état de la technique dans laquelle le message EMM ou au moins la partie contenant le droit (Dr) et son empreinte H(Dr) est d'abord vérifié (Ver EMM) avant d'être stocké dans la mémoire des messages (MM). L'ensemble droit-empreinte [Dr, H(Dr)]Ku est décrypté avec la clé personnelle (Ku) du module de sécurité. Une empreinte H'(Dr) du droit Dr est calculée par le module de sécurité avec la fonction "Hash" puis comparée avec l'empreinte reçue H(Dr). Lorsque la comparaison aboutit, c'est-à-dire lorsque l'empreinte calculée H'(Dr) et l'empreinte reçue H(Dr) sont identiques, le message (EMM) est stocké dans la mémoire des messages (MM) et le droit (Dr) correspondant est mis à jour dans la mémoire des droits (MD).

Dans le cas contraire d'une vérification infructueuse, le message EMM est rejeté (R) et aucune mise à jour ne sera effectuée dans la mémoire (MD) des droits. Selon les options du décodeur, un tel rejet (R) peut être signalé par un message d'erreur approprié et si le nombre de rejets (R) dépasse un certain seuil, le module de sécurité peut être bloqué.

Le message EMM contenant le droit (Dr) et son empreinte H(Dr) est stocké dans la mémoire des messages (MM) de préférence après décryptage avec la clé globale (Kg), c'est-à-dire sous la forme [Dr, H(Dr)]Ku.

Lors de l'étape de vérification postérieure, le droit stocké (Dr') dans la mémoire des droits (MD) est confronté avec le message (EMM) qui a généré ce droit ou sa mise à jour, le message (EMM) est ainsi ré-exécuté (Re-Exe EMM) et le droit (Dr) obtenu est comparé avec le droit (Dr') préalablement stocké. Dans une première phase, le droit (Dr) à vérifier est identifié par exemple sur la base des données sélectionnées dans le flux diffusé parmi les droits qui sont stockés dans la mémoire des droits (MD). Le message (EMM) de droit correspondant est ensuite recherché (S-Dr) dans la mémoire (MM) des messages puis décrypté avec la clé (Ku) du module de sécurité et vérifié avec l'empreinte H(Dr) qui accompagne ce droit. Cette vérification se déroule de la même manière que celle effectuée avant le stockage du message (EMM) et du droit (Dr) après réception. Lorsque cette vérification réussit, le droit (Dr') stocké dans la mémoire des droits (MD) est comparé avec son homologue (Dr) extrait du message (EMM) de droit.

Si le droit (Dr) ré-exécuté ne correspond pas avec le droit Dr' contenu dans la mémoire (MD) des droits (Dr=Dr' ?), le module de sécurité détermine un état de défaut (DEF) du décodeur entraînant soit un fonctionnement avec des droits restreints, soit un blocage nécessitant une intervention particulière pour sa remise en marche. Si les deux droits correspondent (Dr=Dr'), le module de sécurité du décodeur autorise (OK) l'accès aux données audio/vidéo conformément aux droits stockés.

Cet état de défaut (DEF) peut aussi être déterminé lorsque la vérification du droit (Dr) du message (EMM) avec son empreinte H(Dr) échoue avec une empreinte calculée H'(Dr) différente de celle extraite du message (EMM).

Lorsque la recherche (S-Dr) du message (EMM) correspondant à un droit (Dr) préalablement identifié dans la mémoire (MD) des droits n'aboutit à aucun résultat (S-Dr KO), le module de sécurité peut aussi déterminer un état de défaut (DEF). Cette situation se présente lorsqu'un droit (Dr) a été introduit dans la mémoire (MD) par d'autres moyens que par l'intermédiaire de messages (EMM) de droit, par exemple à l'aide d'un logiciel approprié profitant d'une faille de sécurité permettant un accès facilité à la mémoire (MD) des droits.

Selon un exemple d'application, un blocage du module de sécurité nécessite une requête de remise en service au centre de gestion par une autre voie de communication (fax, téléphone, courrier, message court etc.) distincte de la voie de retour du décodeur. Le module de sécurité peut aussi être débloqué avec une clé particulière du type PUK (Personal Unblocking Key) qui peut le débloquer à la manière d'une carte SIM (Subscriber Identity Module) d'un téléphone portable verrouillée à cause d'erreurs de code de démarrage trop nombreuses.

La vérification postérieure peut s'effectuer à différents moments: par exemple, elle a lieu lors du démarrage du décodeur, ou après réception d'un message de contrôle (ECM), soit sur commande grâce à un message d'administration (EMM), ou encore selon une période déterminée par un paramètre dans le logiciel du module de sécurité ou du décodeur.

Selon une variante, seule l'empreinte H(Dr) encryptée avec la clé (Ku) unique du module de sécurité peut être stockée dans la mémoire (MM) des messages. Lors de la vérification, l'empreinte H(Dr) est décryptée et comparée avec une empreinte H'(Dr) calculée sur le droit correspondant stocké dans la mémoire (MD) des droits.

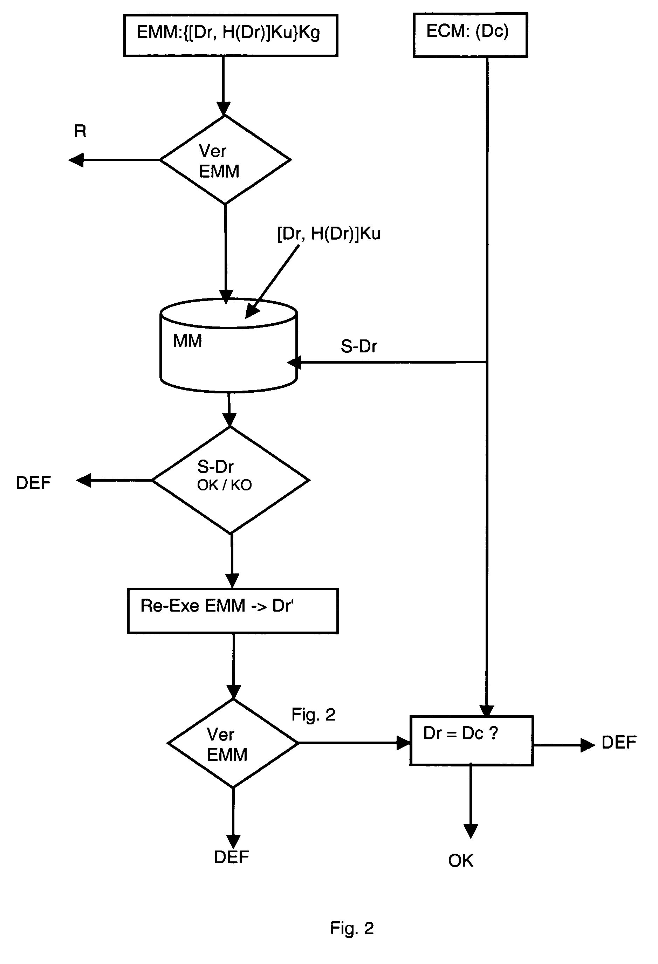

Le schéma de la figure 2 illustre la méthode selon la présente invention dans laquelle la mémoire (MD) des droits n'est plus nécessaire car la vérification s'effectue en comparant directement des droits des messages (EMM) stockés avec les droits conditionnels inclus dans des messages de contrôle (ECM) diffusés régulièrement dans le flux des données audio/vidéo. Ces droits sont nécessaires à l'utilisation du ou des mots de contrôle inclus dans le message de contrôle (ECM) lors de la décryption des données audio/vidéo du flux diffusé.

Un message (EMM) de droit reçu, décrypté avec la clé globale (Kg) puis vérifié avec l'empreinte H(Dr) du droit (Dr) est stocké dans la mémoire (MM) des messages. Lorsque la vérification échoue, le message (EMM) de droit est rejeté (R) entraînant la signalisation d'une erreur ou un blocage du module de sécurité.

A la réception d'un message de contrôle (ECM) contenant un droit conditionnel (Dc), une recherche (S-Dr) d'un message (EMM) de droits correspondant au droit conditionnel (Dc) extrait du message ECM est effectuée dans la mémoire des messages (MM). Lorsque le message de droit est trouvé, il est ré-exécuté c'est-à-dire décrypté avec la clé unique (Ku) du module de sécurité et le droit (Dr) obtenu est vérifié (Ver EMM) à l'aide de son empreinte H(Dr). Cette vérification (Ver EMM) réussie, le droit (Dr) est comparé avec celui issu du message de contrôle ECM (Dr = Dc ?). Le module de sécurité détermine un état de défaut (DEF) aussi bien lorsque la vérification du message échoue que lorsque la comparaison donne un résultat négatif. Ce même état (DEF) peut être déterminé lorsque la recherche (S-Dr) d'un message correspondant à un droit reçu au moyen d'un message de contrôle ECM n'aboutit pas (S-Dr KO).

Ce processus de vérification et de comparaison peut être enclenché à divers moments à savoir:
- à chaque réception d'un message de contrôle ECM ou
- après la réception d'un nombre prédéterminé de message ECM, par exemple tous les 20 messages ECM reçus ou
- sur commande grâce à une instruction incluse dans un message EMM ou ECM, ou
- périodiquement à intervalles de temps prédéfinis, par exemple toutes les 10 minutes.

Selon une configuration possible pour les deux variantes de la méthode, tout échec d'une vérification d'un droit avec son empreinte peut provoquer un blocage du module de sécurité ou des limitations d'accès aux données du flux diffusé au même titre qu'un résultat négatif des comparaisons des droits lors de la dernière étape.

## Revendications

1. Méthode de vérification de droits contenus dans un module de sécurité associé à un appareil de traitement de données numériques diffusées, ledit appareil étant relié à un centre de gestion transmettant des messages d'administration (EMM) encryptés de mise à jour des droits (Dr) d'accès audites données numériques et des messages de contrôle (ECM) servant à décrypter les données diffusées, comprenant les étapes préliminaires suivantes:
- réception et lecture par le module de sécurité de tout ou partie d'un message d'administration (EMM) comprenant au moins un droit (Dr) et une empreinte H(Dr) obtenue par une fonction du type Hash appliquée sur ledit droit (Dr),
- décryption et vérification du message d'administration (EMM) reçu en comparant l'empreinte H(Dr) du droit (Dr) avec une empreinte H'(Dr) déterminée par le module de sécurité,
- lorsque l'empreinte H(Dr) du droit (Dr) est identique à l'empreinte H'(Dr) déterminée par le module de sécurité, stockage de tout ou partie dudit message (EMM) dans une mémoire (MM) des messages du module de sécurité,
- réception d'un message de contrôle (ECM) comprenant au moins un mot de contrôle et un droit conditionnel (Dc) définissant le ou les droits nécessaires pour l'utilisation du mot de contrôle,
ladite méthode est **caractérisée en ce qu'**elle comprend les étapes suivantes:
- extraction du droit conditionnel (Dc) du message de contrôle (ECM)
- recherche dans la mémoire des messages (MM) du message d'administration (EMM) correspondant au droit conditionnel (Dc)
- lorsque le message est trouvé, décryption et vérification dudit message d'administration (EMM) en comparant l'empreinte H(Dr) du droit (Dr) avec une empreinte H'(Dr) déterminée par le module de sécurité,
- lorsque l'empreinte H(Dr) du droit (Dr) est identique à l'empreinte H'(Dr) déterminée par le module de sécurité, comparaison du droit (Dr) contenu dans le message d'administration (EMM) trouvé avec le droit conditionnel (Dc),
- lorsque le résultat de la comparaison indique une différence, détermination d'un état de défaut (DEF) défini soit par un fonctionnement de l'appareil de traitement de données avec des droits restreints, soit par un blocage dudit appareil.

2. Méthode selon la revendication 1, **caractérisée en ce que** le message d'administration (EMM) est encrypté avec une clé globale (Kg), et **en ce que** l'ensemble formé par le droit (Dr) et par l'empreinte H(Dr) est encrypté avec une clé unique (Ku) du module sécurité.

3. Méthode selon la revendication 2, **caractérisée en ce que** le message d'administration (EMM) est stocké dans la mémoire des messages (MM) après décryption avec la clé globale (Kg).

4. Méthode selon l'une des revendications 1 à 3, **caractérisée en ce que** le message d'administration (EMM) reçu, lu et décrypté par le module de sécurité est rejeté lorsque la vérification dudit message d'administration (EMM) échoue.

5. Méthode selon l'une des revendications 1 à 4, **caractérisée en ce que** l'état de défaut (DEF) est déterminé lorsque la vérification du message d'administration (EMM) trouvé dans la mémoire des messages (MM) échoue.

6. Méthode selon l'une des revendications 1 à 5, **caractérisée en ce que** l'état de défaut (DEF) est déterminé lorsque la recherche d'un message d'administration (EMM) correspondant à un droit reçu au moyen d'un message de contrôle ECM échoue.

7. Méthode selon l'une des revendications 1 à 6, **caractérisée en ce que** l'état de défaut (DEF) représente un fonctionnement de l'appareil avec des droits restreints ou un blocage du module de sécurité.

8. Méthode selon la revendication 1, **caractérisée en ce que** le processus de vérification et de comparaison du droit conditionnel (Dc) du message de contrôle (ECM) avec le droit (Dr) inclus dans le message d'administration (EMM) stocké est exécuté soit à chaque réception d'un message de contrôle (ECM), soit après la réception d'un nombre prédéterminé de message de contrôle (ECM), soit sur commande grâce à une instruction incluse dans le message d'administration EMM ou dans le message de contrôle (ECM), soit périodiquement à intervalles prédéfinis.

9. Méthode selon l'une des revendications 1 à 8, **caractérisée en ce qu'**elle est effectuée par le module de sécurité d'un décodeur de données numériques audio/vidéo de télévision à péage connecté à un centre de gestion transmettant, à destination dudit module de sécurité, des messages de contrôle (ECM) et des messages d'administration (EMM) de mise à jour des droits d'accès audites données numériques.

## Patentansprüche

1. Verfahren zur Prüfung von Rechten in einem Sicherheitsmodul, das mit einem Apparat zur Verarbeitung von ausgestrahlten digitalen Daten verbunden ist, der mit einem Verwaltungszentrum verbunden ist, das verschlüsselte Verwaltungsnachrichten (EMM) zur Aktualisierung der Rechte (Dr) zum Zugang zu den genannten digitalen Daten überträgt sowie Kontrollnachrichten (ECM) zu dem Zweck, die ausgestrahlten Daten zu entschlüsseln, mit folgenden Vorstufen:
- Empfang und Ablesen, durch das Sicherheitsmodul, einer ganzen oder eines Teils einer Verwaltungsnachricht (EMM) mit mindestens einem Recht (Dr) und einem Fingerabdruck H(Dr), erhalten durch eine auf besagtes Recht (Dr) angewandte Hash-Funktion,
- Entschlüsselung und Prüfung der empfangenen Verwaltungsnachricht (EMM) durch Vergleich des Fingerabdrucks H(Dr) des Rechtes (Dr) mit einem von dem Sicherheitsmodul bestimmten Fingerabdruck H'(Dr),
- wenn der Fingerabdruck H(Dr) des Rechtes (Dr) identisch mit dem von dem Sicherheitsmodul bestimmten Fingerabdruck H'(Dr) ist, Speicherung der ganzen oder eines Teils der genannten Nachricht (EMM) in einem Speicher (MM) der Nachrichten des Sicherheitsmoduls,
- Empfang einer Kontrollnachricht (ECM) mit mindestens einem Kontrollwort und einem bedingten Recht (Dc), die das oder die notwendige(n) Recht(e) für die Benutzung des Kontrollworts definiert,
wobei besagtes Verfahren **dadurch gekennzeichnet ist, dass** es die folgenden Schritte umfasst:
- Extraktion des bedingten Rechts (Dc) aus der Kontrollnachricht (ECM)
- Suche, in dem Speicher der Nachrichten (MM), nach der Verwaltungsnachricht (EMM), die dem bedingten Recht (Dc) entspricht
- wenn die Nachricht gefunden ist, Entschlüsselung und Prüfung der genannten Verwaltungsnachricht (EMM) durch Vergleich des Fingerabdrucks H(Dr) des Rechtes (Dr) mit einem von dem Sicherheitsmodul bestimmten Fingerabdruck H'(Dr),
- wenn der Fingerabdruck H(Dr) des Rechtes (Dr) identisch mit dem von dem Sicherheitsmodul bestimmten Fingerabdruck H'(Dr) ist, Vergleich des in der gefundenen Verwaltungsnachricht (EMM) enthaltenen Rechtes (Dr) mit dem bedingten Recht (Dc),
- wenn das Ergebnis des Vergleichs einen Unterschied ergibt, Feststellung eines Fehlerzustands (DEF), definiert entweder durch einen Betrieb des Datenverarbeitungsapparats mit eingeschränkten Rechten oder durch eine Blockierung des genannten Apparats.

2. Verfahren nach Anspruch 1, **gekennzeichnet dadurch, dass** die Verwaltungsnachricht (EMM) mit einem globalen Schlüssel (Kg) verschlüsselt wird, sowie dadurch, dass die Einheit bestehend aus dem Recht (Dr) und dem Fingerabdruck H(Dr) mit einem einzigen Schlüssel (Ku) des Sicherheitsmoduls verschlüsselt wird.

3. Verfahren nach Anspruch 2, **gekennzeichnet dadurch, dass** die Verwaltungsnachricht (EMM) nach der Entschlüsselung mit dem globalen Schlüssel (Kg) in dem Speicher der Nachrichten (MM) gespeichert wird.

4. Verfahren nach einem der Ansprüche 1 bis 3, **gekennzeichnet dadurch dass** die empfangene, gelesene und von dem Sicherheitsmodul entschlüsselte Verwaltungsnachricht (EMM) abgelehnt wird, wenn die Prüfung der genannten Verwaltungsnachricht (EMM) scheitert.

5. Verfahren nach einem der Ansprüche 1 bis 4, **gekennzeichnet dadurch, dass** der Fehlerzustand (DEF) festgestellt wird, wenn die Prüfung der Verwaltungsnachricht (EMM), die in dem Speicher der Nachrichten (MM) gefunden wurde, scheitert.

6. Verfahren nach einem der Ansprüche 1 bis 5, **gekennzeichnet dadurch, dass** der Fehlerzustand (DEF) festgestellt wird, wenn die Suche nach einer Verwaltungsnachricht (EMM), die einem Recht entspricht, das mittels einer Kontrollnachricht ECM empfangen wurde, scheitert.

7. Verfahren nach einem der Ansprüche 1 bis 6, **gekennzeichnet dadurch, dass** der Fehlerzustand (DEF) einen Betrieb des Apparats mit eingeschränkten Rechten darstellt oder eine Blockierung des Sicherheitsmoduls.

8. Verfahren nach Anspruch 1 , **gekennzeichnet dadurch, dass** der Prüfungs- und Vergleichsprozess des bedingten Rechts (Dc) der Kontrollnachricht (ECM) mit dem Recht (Dr) in der gespeicherten Verwaltungsnachricht (EMM) entweder bei jedem Empfang einer Kontrollnachricht (ECM) ausgeführt wird oder nach dem Empfang einer vorgegebenen Zahl von Kontrollnachrichten (ECM) oder auf Befehl dank einer Anweisung in der Verwaltungsnachricht EMM oder in der Kontrollnachricht (ECM) oder in regelmäßigen Abständen.

9. Verfahren nach einem der Ansprüche 1 bis 8, **dadurch gekennzeichnet, dass** es vom Sicherheitsmodul eines Decoders für digitale Audio-/Video-Daten des Bezahlfernsehens durchgeführt wird, der mit einem Verwaltungszentrum verbunden ist, der an das besagte Sicherheitsmodul Kontrollnachrichten (ECM) und Verwaltungsnachrichten (EMM) zur Aktualisierung der Zugangsrechte zu den genannten digitalen Daten überträgt.

## Claims

1. Method for verifying rights contained in a security module associated to an apparatus processing broadcast digital data, said apparatus being connected to a management center transmitting encrypted management messages (EMM) for updating rights (Dr) for accessing said digital data and control messages (ECM) for decrypting the broadcast data, the method comprising following preliminary steps:
- receiving and reading by the security module all or part of a management message (EMM) comprising at least a right (Dr) and a digest H(Dr) obtained by a Hash type function applied on said right (Dr),
- decrypting and verifying the received management message (EMM) by comparing the digest H(Dr) of the right (Dr) with a digest H'(Dr) determined by the security module,
- when the digest H(Dr) of the right (Dr) is identical to the digest H'(Dr) determined by the security module, storing all or part of said message (EMM) in a messages memory (MM) of the security module,
- receiving a control message (ECM) comprising at least a control word and a conditional right (Dc) defining the right (s) necessary for using the control word,
Said method is **characterized in that** it comprises the following steps:
- extracting the conditional right (Dc) from the control message (ECM),
- searching in the messages memory (MM) the management message (EMM) corresponding to the conditional right (Dc),
- when the message is found, decrypting and verifying said management message (EMM) by comparing the digest H(Dr) of the right (Dr) with a digest H'(Dr) determined by the security module,
- when the digest H(Dr) of the right (Dr) is identical to the digest H'(Dr) determined by the security module, comparing the right (Dr) contained in the found management message (EMM) with the conditional right (Dc),
- when the result of the comparison indicates a difference, determining a default state (DEF) defined either by an operating mode of the data processing apparatus with restricted rights or by blocking said apparatus.

2. Method according to claim 1, **characterized in that** the management message (EMM) is encrypted with a global key (Kg), and **in that** the set formed by the right (Dr) and the digest H(Dr) is encrypted with a unique key (Ku) of the security module.

3. Method according to claim 2, **characterized in that** the management message (EMM) is stored in the messages memory (MM) after decrypting with the global key (Kg).

4. Method according to anyone of the claims 1 to 3, **characterized in that** the management message (EMM) received, read and decrypted by the security module is rejected when the verification of said management message (EMM) fails.

5. Method according to anyone of the claims 1 to 4, **characterized in that** the default state (DEF) is determined when the verification of the management message (EMM) found in the messages memory (MM) fails.

6. Method according to anyone of the claims 1 to 5, **characterized in that** the default state (DEF) is determined when the search of a management message (EMM) corresponding to a right received by means of a control message (ECM) fails.

7. Method according to anyone of the claims 1 to 6, **characterized in that** the default state (DEF) represents an operating mode of the apparatus with restricted rights or a blocking of the security module.

8. Method according to claim 1, **characterized in that** the verification and comparison process of the conditional right (Dc) of the control message (ECM) with the right (Dr) included in the stored management message (EMM) is executed either at each reception of a control message (ECM), or after reception of a predetermined number of control messages (ECM), or on command based on an instruction included in the management message (EMM) or in the control message (ECM), or periodically at predefined intervals.

9. Method according to anyone of the claims 1 to 8, **characterized in that** it is carried out by the security module of a pay-TV digital audio/video data decoder connected to a management center transmitting to said security module control messages (ECM) and management messages (EMM) for updating the rights for accessing said digital data.
